**Europäisches Patentamt**

**European Patent Office**

**Office européen des brevets**

(19)

(11) Veröffentlichungsnummer : **0 224 302 B1**

# EUROPÄISCHE PATENTSCHRIFT

(12)

(45) Veröffentlichungstag der Patentschrift :
30.01.91 Patentblatt 91/05

(51) Int. Cl.⁵ : **H04N 9/64, H04N 5/208**

(21) Anmeldenummer : 86202019.5

(22) Anmeldetag : 17.11.86

(54) Schaltungsanordnung zum Erhöhen der Schärfe von Farbkanten.

(30) Priorität : 21.11.85 DE 3541103

(43) Veröffentlichungstag der Anmeldung :
03.06.87 Patentblatt 87/23

(45) Bekanntmachung des Hinweises auf die
Patenterteilung :
30.01.91 Patentblatt 91/05

(84) Benannte Vertragsstaaten :
DE FR GB IT

(56) Entgegenhaltungen :
DE-A- 2 344 817
DE-A- 3 223 580
DE-B- 1 562 170

(73) Patentinhaber : Philips Patentverwaltung
GmbH
Wendenstrasse 35 Postfach 10 51 49
D-2000 Hamburg 1 (DE)
DE
Patentinhaber : N.V. Philips'
Gloeilampenfabrieken
Groenewoudseweg 1
NL-5621 BA Eindhoven (NL)
FR GB IT

(72) Erfinder : Johanndeiter, Martin
Schönweg 2
D-2000 Hamburg 61 (DE)
Erfinder : Ruprecht, Jürgen
Hamburger Kamp 4b
D-2000 Oststeinbek (DE)
Erfinder : Oldach, Detlef
Dahlgrünring 6
D-2102 Hamburg 93 (DE)
Erfinder : Schmidt, Martin
Zeppelinring 1
D-2300 Kiel 14 (DE)

(74) Vertreter : Poddig, Dieter, Dipl.-Ing. et al
Philips Patentverwaltung GmbH
Wendenstrasse 35 Postfach 10 51 49
D-2000 Hamburg 1 (DE)

**Beschreibung**

Die Erfindung betrifft eine Schaltungsanordnung zum Erhöhen der Schärfe von Farbkanten bei der Wiedergabe eines aus einem Helligkeitssignal und wenigstens einem Farbdifferenzsignal bestehenden Farbfernsehsignals, mit einem die Steilheit des Helligkeitssignals detektierenden Steilheitsdetektor, der ein Detektionssignal abgibt, wenn die Steilheit einen bestimmten Betrag überschreitet, mit einer Steuerschaltung, die wenigstens eine einen Umschalter und einen Speicher umfassende Versteilerungsschaltung für ein Farbdifferenzsignal steuert und mit einer Verzögerungsschaltung für das Helligkeitssignal zur Herstellung der Koinzidenz mit dem versteilerten Farbdifferenzsignal.

Das Bildauflösungsvermögen bei den heute verwendeten Farbfernsehübertragungssystemen ist durch die festgelegte Übertragungsbandbreite begrenzt. Die Farbdifferenzsignale werden mit einer Bandbreite übertragen, die nur rund ein Fünftel derjenigen des Helligkeitssignals beträgt. Entsprechend gering ist die Farbauflösung im Fernsehbild. Dies geht besonders deutlich an Kanten hervor. Die Farbübergänge sind eben entsprechend der kleineren Übertragungsbandbreite des Farbdifferenzsignals ungefähr fünfmal so lang wie die zugehörigen Helligkeitsübergänge.

Zur Verbesserung des Kantenauflösungsvermögen ist es also erforderlich, die relativ flach verlaufenden Farbsignalanstiege an Kanten zu versteilern. Eine solche Schaltungsanordnung der eingangs genannten Art zur Erhöhung der Schärfe an Farbkanten ist aus DE-A-15 62 170 bekannt. In dieser Schaltung wird das Helligkeitssignal einem Steilheitsdetektor zugeführt, der ein Detektionssignal abgibt, wenn der Anstieg im Helligkeitssignal steil genug ist. Die beiden Farbdifferenzsignale werden jeweils über einen Verzögerer, der eine Verzögerungszeit aufweist, die ungefähr gleich der Hälfte der Zeit des maximalen Anstiegs (halbe Anstiegszeit) eines Farbdifferenzsignals ist, dem Umschalter zugeführt. Der Ausgang des Steilheitsdetektors ist mit einem ersten Impulsformer verbunden, der beim Auftreten eines Detektionssignals jeweils einen ersten Schalter kurzzeitig schließt, so daß jeweils der Ausgang des Verzögerers mit dem Eingang des Speichers verbunden ist. Ebenfalls wird eine Steuerschaltung aktiviert, die den Umschalter so umschaltet, daß der Ausgang des Speichers den Ausgang des Umschalters bildet. Nach einer halben Anstiegszeit wird durch einen zweiten Impulsformer jeweils ein zweiter Schalter kurzzeitig geschlossen, der den Eingang des Verzögerers mit dem Eingang des Speichers verbindet. Nach einer weiteren halben Anstiegszeit setzt die Steuerschaltung den Umschalter zurück.

Da das Helligkeitssignal eine wesentlich höhere Bandbreite als ein Farbdifferenzsignal aufweist, kann es vorkommen, daß während einer langen Anstiegszeit eines Farbdifferenzsignals mehrere Sprünge im Helligkeitssignal auftreten. Obwohl eine Versteilerung eines Farbdifferenzsignals nicht gewünscht ist, gibt der Steilheitsdetektor ein Detektionssignal zur Erzeugung eines versteilerten Farbdifferenzsignals ab. Zusätzlich wird ein zwischen dem ersten Impulsformer und dem Steilheitsdetektor liegender Schalter von der Steuerschaltung geöffnet, wenn ein Detektionssignal aufgetreten ist, und nach der Erzeugung des versteilerten Farbdifferenzsignals geschlossen. Durch diesen Schaltungsaufbau bedingt ergeben sich im Fernsehbild Farbverfälschungen.

Aus DE-A-32 23 580 ist ebenfalls eine Schaltungsanordnung zum Erhöhen der Schärfe von Farbkanten bekannt, bei der ein Farbdifferenzsignal einerseits über einen Schalter in einen Speicher eingelesen wird und andererseits einem Steilheitsdetektor zugeführt wird, der ein Detektionssignal erzeugt, wenn die Steilheit einen bestimmten Betrag überschreitet. Beim Auftreten des Detektionssignal wird der Schalter geöffnet und nach Ende der Anstiegszeit des Farbdifferenzsignals der Schalter wieder geschlossen. Der Speicher liefert also das versteilerte Farbdifferenzsignal. Die dabei auftretende Verzögerung des Farbdifferenzsignals wird durch eine entsprechende Verzögerung im Helligkeitssignal kompensiert.

Bei den heute üblichen Videorecordersystemen werden die Helligkeits- und Farbdifferenzsignale bei der Aufnahme zusätzlich bandbegrenzt. Dadurch ist bei der Wiedergabe die Anstiegszeit des Farbdifferenzsignals verlängert. Es hat sich in der Praxis gezeigt, daß eine Schaltungsanordnung nach der DE-A-32 23 580 eine senkrechte Farbkante nicht immer an der gleichen Stelle einer Zeile erkennt, so daß Farbkantenverzerrungen im Bild auftreten.

Der Erfindung liegt die Aufgabe zugrunde, eine Schaltungsanordnung der eingangs genannten Art so auszubilden, daß beim Auftreten von mehreren Sprüngen im Leuchtdichtesignal während der Anstiegszeit eines Farbdifferenzsignals keine Farbverfälschungen vorkommen.

Diese Aufgabe wird erfindungsgemäß dadurch gelöst, daß in der ersten Stellung des Umschalters ein Farbdifferenzsignal in den das versteilerte Farbdifferenzsignal liefernden Speicher eingelesen wird und in der zweiten Stellung kein Farbdifferenzsignal zugeführt wird und daß die Steuerschaltung einen Zähler enthält, der beim Auftreten des Detektionssignals den Umschalter von der ersten in die zweite Stellung setzt, der nach einer wenigstens der Dauer des steilsten Farbdifferenzsignalanstiegs entsprechenden Anzahl von gezählten äquidistanten Takten den Umschalter in die erste Stellung zurücksetzt und der beim Auftreten eines neuen Detektionssignals während der zweiten Stellung des Umschalters diesen kurzzeitig in die erste Stellung zurücksetzt und dann nach Setzung in die zweite Stellung die entsprechende Anzahl der Takte erneut zählt.

In der erfindungsgemäßen Schaltungsanordnung wird die Versteilerung der Farbdifferenzsignale auf einfache Art jeweils mit Hilfe eines Umschalters und eines Speichers durchgeführt, in dem zu Beginn eines Anstiegs der Wert des Farbdifferenzsignals gespeichert wird und nach Ende des Anstiegs der neue Wert übernommen wird. Die Dauer der Speicherung wird durch einen Zähler bestimmt, der nach dem Auftreten eines Detektionssignals eine bestimmte Anzahl von regelmäßig auftretenden Takten zählt. Die Anzahl der Takte soll wenigstens der kürzesten Anstiegszeit eines Farbdifferenzsignals entsprechen. Der neue Wert des Farbdifferenzsignals wird dann nach dem Ende des Anstiegs übernommen. Kommen bei einer langsamen Änderung des Farbdifferenzsignals mehrere Sprünge im Helligkeitssignal vor, wird das Farbdifferenzsignal nicht wie bei der bekannten Schaltungsanordnung verfälscht. Durch die Sprünge im Helligkeitssignal wird immer ein Detektionssignal erzeugt, das den Zähler zu Beginn der Sprünge aktiviert oder, wenn er zählt, in die Anfangsstellung zurücksetzt, um dann erneut mit dem Zählen zu beginnen. Beim Auftreten des Detektionssignals wird kurzzeitig der Umschalter in die erste Stellung gesetzt, so daß der Speicher einen neuen Wert übernehmen kann. Aus dem kontinuierlichen Farbdifferenzsignal entsteht dadurch ein stufenförmiges, was im Fernsehbild aber keine bemerkbaren Verfälschungen hervorruft.

In einer Weiterbildung der Erfindung ist vorgesehen, daß der Steilheitsdetektor einen das Helligkeitssignal differenzierenden Hochpaß, einen den Betrag des differenzierten Helligkeitssignals bildenden Betragsbildner und eine das Ausgangssignal des Betragsbildners mit einem Referenzsignal vergleichende Vergleichsschaltung enthält, die das Detektionssignal abgibt, wenn das Ausgangssignal des Betragsbildners größer ist als das Referenzsignal.

Da bei der Detektion einer genügend großen Steilheit des Helligkeitssignals der Wert des Farbdifferenzsignals zu Beginn eines Anstiegs gespeichert werden soll, ist vorgesehen, daß das Farbdifferenzsignal über eine Verzögerungsschaltung der Versteilerungsschaltung zugeführt wird, so daß der Beginn eines Anstiegs beim Farbdifferenz- und Helligkeitssignal zeitlich zusammenfällt.

In einer Fortbildung der Erfindung ist vorgesehen, daß das Helligkeitssignal und das Farbdifferenzsignal als Folge amplitudendiskreter Abtastwerte mit einer durch ein Taktsignal bestimmten Abtastfrequenz vorliegen und daß die Abtastfrequenz gleich der Frequenz des dem Zähler zugeführten Taktsignals ist. Bei einer digitalen Realisierung der Schaltungsanordnung kann der für den Zähler notwendige, das Taktsignal erzeugende Taktgenerator ebenfalls für die übrigen Elemente genutzt werden.

In der digitalen Schaltungsanordnung ergibt sich für den Speicher eine einfache Realisierungsmöglichkeit, indem ein Register verwendet wird, dessen Eingang in der zweiten Stellung des Umschalters mit seinem Ausgang verbunden ist.

Anhand der Zeichnungen wird im folgenden die Erfindung näher erläutert. Es zeigen :

Fig. 1 ein Ausführungsbeispiel der Erfindung,
Fig. 2 Diagramme zur Erläuterung der Fig. 1 und
Fig. 3 ein Ausführungsbeispiel für einen in Fig. 1 verwendeten Zähler.

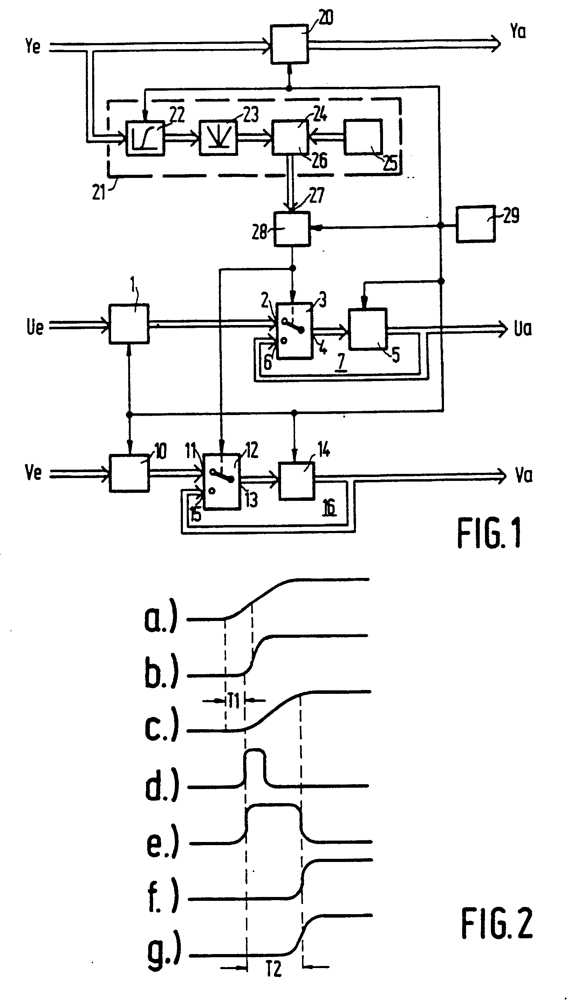

In Fig. 1 sind V und U Farbdifferenzsignale und Y das Helligkeitssignal. Mit dem Index e sind die Eingangssignale und mit dem Index a die Ausgangssignale bezeichnet. Das Helligkeitssignal und die Farbdifferenzsignale liegen als Folge binär codierter Abtastwerte vor und weisen z.B. eine Auflösung von 7 bit auf. Die Abtastwerte treten mit einer Folgefrequenz, der Abtastfrequenz, von z.B. 13,5 MHz auf.

Das Farbdifferenzsignal Ue wird über ein Verzögerungsglied 1, das eine Verzögerungszeit von T1 aufweist, einem Eingang 2 eines Umschalters 3 zugeführt. Der Ausgang 4 des Umschalters 3 ist mit einem Register 5 verbunden, daß das Farbdifferenzsignal Ua liefert und dessen Ausgang mit dem zweiten Eingang 6 des Umschalters 3 verbunden ist. Der Umschalter 3 und das Register 5 bilden eine erste Versteilerungsschaltung 7. Das zweite Farbdifferenzsignal Ve wird einem Verzögerungsglied 10 zugeleitet, das ebenfalls eine Verzögerungszeit T1 aufweist. Der Ausgang des Verzögerungsgliedes 10 ist mit dem ersten Eingang 11 eines Umschalters 12 verbunden. Der Ausgang 13 des Umschalters 12 ist an ein Register 14 angeschlossen, dessen Ausgang einerseits mit dem zweiten Eingang 15 des Umschalters 12 verbunden ist und andererseits das Farbdifferenzsignal Va liefert. Der Umschalter 12 und das Register 14 bilden eine zweite Versteilerungsschaltung 16.

Das Helligkeitssignal Ye wird einerseits einem Verzögerungsglied 20, das eine Verzögerungszeit T2 aufweist und das das Helligkeitssignal Ya liefert, und andererseits einem Steilheitsdetektor 21 zugeführt, der einen Hochpaß 22, einen Betragsbildner 23, eine Vergleichsschaltung 24 und einen Festwertspeicher 25 umfaßt. Im Hochpaß 22 wird das Helligkeitssignal Ye differenziert, in dem Betragsbildner 23 wird der Betrag der Differenzierung gebildet, und das Ausgangssignal des Betragsbildners 23 wird in der ein Detektionssignal erzeugenden Vergleichsschaltung 24 mit einem in dem Festwertspeicher 25 gespeicherten Wert verglichen. Der Ausgang 26 des Steilheitsdetektors 21, der auch der Ausgang der Vergleichsschaltung 24 ist, ist mit dem Eingang 27 eines Zählers 28 verbunden. Dem Zähler 28 wird ein Taktsignal von einem Taktsignalgenerator 29 zugeführt, dessen Frequenz gleich der Abtastfrequenz ist. Ebenso wird den Verzögerungsgliedern 1, 10 und 20, den Registern 5 und 14 und dem Hochpaß 22 das Taktsignal zugeleitet.

Durch die Abgabe eines Detektionssignals der Vergleichsschaltung 24 wird der Zähler 28 gestartet. Die Vergleichsschaltung 24 gibt ein Detektionssignal ab, sobald das Ausgangssignal des Betragsbildners 23 größer ist als der gespeicherte Wert im Festwertspeicher 25. Mit dem Detektionssignal wird der Zähler 28 gestartet und gleichzeitig die Umschalter 3 und 12 von einer ersten in eine zweite Stellung gesetzt. Die Umschalter 3 und 12 wechseln dann jeweils von einer ersten in eine zweite Stellung. In der ersten Stellung ist der Ausgang 4 des Umschalters 3 mit seinem Eingang 2 und in der zweiten Stellung mit seinem Eingang 6 verbunden. Während der ersten Stellung des Umschalters 12 ist dessen Ausgang 13 mit dem Eingang 11 und während der zweiten Stellung mit seinem Eingang 15 verbunden. Nachdem der Zähler 28 eine bestimmte Anzahl von Takten gezählt hat, gibt er ein Steuersignal ab, das den beiden Umschaltern 3 und 12 zugeführt wird, wodurch die Umschalter 3 und 12 in die erste Stellung zurückkehren.

Im folgenden wird die Wirkungsweise der Schaltungsanordnung nach Fig. 1 mit Hilfe der schematischen Zeitabläufe in Fig. 2 erläutert. In Diagramm a ist ein Farbdifferenzsignal und in Diagramm b das Helligkeitssignal dargestellt. Der Anstieg von einem niedrigeren auf einen höheren Pegel dauert beim Farbdifferenzsignal länger als beim Helligkeitssignal, wegen der geringen Bandbreite des Farbdifferenzsignals gegenüber dem Helligkeitssignal. Das Helligkeitssignal wird im Hochpaß 22 differenziert, so daß ein Impuls dem Eingang des Betragsbildners 23 zugeführt wird, wenn ein Helligkeitssignalanstieg vorliegt, wie das schematisch in Diagramm d dargestellt ist. Überschreitet das am Ausgang des Betragsbildners 23 liegende Signal den gespeicherten Wert im Festwertspeicher 25, wird ein Detektionssignal erzeugt, das den Zähler 28 startet. Der gespeicherte Wert entspricht dabei dem Betrag der Steilheit, bei dem das Farbdifferenzsignal ungefähr den steilsten Anstieg hat. Gleichzeitig gibt der Zähler 28 ein Steuersignal ab, das die Umschalter 3 und 12 in die zweite Stellung setzt. Nach einer bestimmten Anzahl von gezählten Takten wird der Zähler zurückgesetzt, und das Steuersignal ändert sich so, daß die Umschalter 3 und 12 in die erste Stellung zurückkehren. Das Steuersignal des Zählers 28 ist schematisch in Diagramm e aufgezeichnet.

Da das Farbdifferenzsignal eine geringere Bandbreite als das Helligkeitssignal aufweist, beginnt an einer Farbkante der Anstieg des Farbdifferenzsignals eher als der Anstieg des Helligkeitssignals. Die Mittelpunkte der Anstiege beider Signale fallen zusammen, wie das auch aus dem Diagramm a und b ersichtlich ist. Damit der Beginn des Anstiegs beim Farbdifferenzsignal und Helligkeitssignal übereinstimmt, wird das Farbdifferenzsignal um die Zeit T1 verzögert. Das verzögerte Farbdifferenzsignal ist in Diagramm c dargestellt. Beim Auftreten eines Detektionssignals werden die Umschalter 3 und 12 aus der ersten in die zweite Stellung versetzt und und somit in den Speichern 5 und 14 der vor dem Anstieg vorliegende Farbdifferenzsignalwert gespeichert. Wenn der Zähler 28 die bestimmte Anzahl von Takten gezählt hat, die sich nach der zeitlichen Dauer des Farbdifferenzsignalanstiegs richtet, werden die Umschalter 3 und 12 in die erste Stellung zurückgesetzt und über die Speicher 5 bzw. 14 wird der aktuelle Farbdifferenzsignalwert ausgegeben. In Diagramm f ist das versteilerte Farbdifferenzsignal Ua oder Va dargestellt, das am Ausgang des Speichers 5 und 14 erscheint.

Um die Koinzidenz zwischen dem Leuchtdichtesignal und dem versteilerten Farbdifferenzsignal wieder herzustellen, wird das Leuchtdichtesignal im Verzögerungsglied 20 um die Zeit T2 verzögert. Das am Ausgang des Verzögerungsgliedes 20 erscheinende Helligkeitssignal Ya ist in Diagramm g gezeigt.

Wird von der Vergleichsschaltung 24 ein Detektionssignal erzeugt, wenn der Zähler 28 zählt und die Umschalter 3 und 12 in der zweiten Stellung liegen, wird der Zähler 28 zurückgesetzt und damit die Umschalter 3 und 12 in die erste Stellung zurückgebracht. Mit dem nächsten Takt beginnt der Zähler 28 erneut zu zählen und setzt gleichzeitig die Umschalter 3 und 12 wieder in die zweite Stellung. Durch diese Möglichkeit, den Zähler neu zu starten, treten keine Farbverfälschungen im Bild auf, wenn ein Helligkeitssignal mit mehreren Signalsprüngen auftritt, das Farbdifferenzsignal sich aber nur langsam ändert. Am Ausgang der beiden Versteilerungsschaltungen 7 und 16 erscheint dann ein stufenförmiges Signal, das keine bemerkbaren Farbverfälschungen hervorruft.

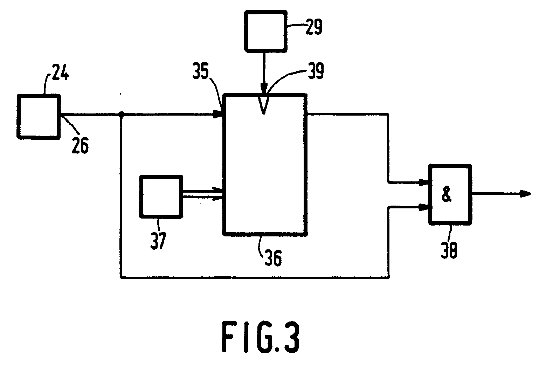

Ein Ausführungsbeispiel für den Zähler 28 ist in Fig. 3 dargestellt. Der Ausgang 26 der Vergleichsschaltung 24, der das Detektionssignal abgibt, ist einerseits mit einem Starteingang 35 einer Zählschaltung 36 und andererseits mit einem ersten Eingang eines UND-Gatters 38 verbunden. Weiterhin ist eine Speicherschaltung 37 vorhanden, in der der Zählerstand gespeichert ist, von dem die Zählschaltung 36 beginnt zu zählen. Der Ausgang der Zählschaltung 36 ist mit einem weiteren Eingang des UND-Gatters 38 verbunden. Das Ausgangssignal des UND-Gatters 38 ist das Steuersignal des Zählers 28. Die Zählschaltung 36 weist noch einen Takteingang 39 auf, dem das Taktsignal vom Taktsignalgenerator 29 zugeführt wird.

Ist das Ausgangssignal des Betragsbildners 23 größer als das Signal, welches vom Festwertspeicher 25 geliefert wird, verändert sich das Detektionssignal der Vergleichsschaltung 24 so, daß es von einem hohen zu einem niedrigen Pegel wechselt. Mit dem auf diesen Wechsel folgenden Takt wird in die Zählschaltung 36 der Zählerstand vom Speicher 37 geladen. Gleichzeitig wechselt das Ausgangssignal der Zählschaltung 36 von einem niedrigen auf einen hohen Pegel. Das Ausgangssignal der Zählschaltung 36 bleibt solange auf einem hohen Pegel bis die Zählschaltung 36 ausgehend von dem geladenen Zählerstand auf Null gezählt hat. Da das Detektionssignal nur wenige Takte auf einem niedrigen Pegel bleibt, wird nach dem Taktwechsel auf einen hohen Pegel das Steuersignal des Zählers 28, d.h. das Ausgangssignal des UND-Gatters 38 verändert. Das Ausgangssignal des UND-Gatters 38 wechselt von einem niedrigen auf einen hohen Pegel. Wenn die Zählschaltung 36 auf Null gezählt hat, wechselt ihr Ausgangssignal auf einen niedrigen Pegel und ebenso das Steuersignal. Tritt im Detektionssignal ein Zustandswechsel auf bevor die Zählschaltung 36 auf Null gezählt hat, wird das Steuersignal kurzzeitig auf einen niedrigen Pegel gesetzt, da das Detektionssignal von einem hohen auf einen niedrigen Pegel wechselt. Das Ausgangssignal der Zählschaltung bleibt auf einem hohen Pegel.

Tritt im Helligkeitssignal ein Sprung auf, ohne daß ein Farbdifferenzsignal einen Sprung aufweist, werden die Umschalter 3 und 12 aus der ersten in die zweite Stellung versetzt. Da sich das Farbdifferenzsignal jedoch wenig ändert, wird es durch diesen Sprung im Leuchtdichtesignal kaum beeinflußt.

Weist jedoch nur das Farbdifferenzsignal einen Sprung auf, so werden die Farbdifferenzsignale unverändert, d.h. mit ihrer durch die Bandbreitenbegrenzung gegebenen Dauer des Anstiegs übertragen.

## Ansprüche

1. Schaltungsanordnung zum Erhöhen der Schärfe von Farbkanten bei der Wiedergabe eines aus einem Helligkeitssignal und wenigstens einem Farbdifferenzsignal bestehenden Farbfernsehsignals, mit einem die Steilheit des Helligkeitssignals detektierenden Steilheitsdetektor (21), der ein Detektionssignal abgibt, wenn die Steilheit einen bestimmten Betrag überschreitet, mit einer Steuerschaltung, die wenigstens eine einen Umschalter (3, 12) und einen Speicher (5, 14) umfassende Versteilerungsschaltung (7, 16) für ein Farbdifferenzsignal steuert und mit einer Verzögerungsschaltung (20) für das Helligkeitssignal zur Herstellung der Koinzidenz mit dem versteilerten Farbdifferenzsignal, dadurch gekennzeichnet, daß in der ersten Stellung des Umschalters (3, 12) ein Farbdifferenzsignal in den das versteilerte Farbdifferenzsignal liefernden Speicher (5, 14) eingelesen wird und in der zweiten Stellung kein Farbdifferenzsignal zugeführt wird und daß die Steuerschaltung einen Zähler (28) enthält, der beim Auftreten des Detektionssignals den Umschalter (3, 12) von der ersten in die zweite Stellung setzt, der nach einer wenigstens der Dauer des steilsten Farbdifferenzsignalanstiegs entsprechenden Anzahl von gezählten äquidistanten Takten den Umschalter (3, 12) in die erste Stellung zurücksetzt und der beim Auftreten eines neuen Detektionssignal während der zweiten Stellung des Umschalters (3, 12) diesen kurzzeitig in die erste Stellung zurücksetzt und dann nach Setzung in die zweite Stellung die entsprechende Anzahl der Takte erneut zählt.

2. Schaltungsanordnung nach Anspruch 1, dadurch gekennzeichnet, daß der Steilheitsdetektor (21) einen das Helligkeitssignal differenzierenden Hochpaß (22), einen den Betrag des differenzierten Helligkeitssignals bildenden Betragsbildner (23) und eine das Ausgangssignal des Betragsbildners mit einem Referenzsignal vergleichende Vergleichsschaltung (24) enthält, die das Detektionssignal abgibt, wenn das Ausgangssignal des Betragsbildners (23) größer ist als das Referenzsignal.

3. Schaltungsanordnung nach einem der vorhergehenden Ansprüche, dadurch gekennzeichnet, daß das Farbdifferenzsignal über eine Verzögerungsschaltung (1, 10) der Versteilerungsschaltung (7, 16) zugeführt wird, so daß der Beginn eines Anstiegs beim Farbdifferenz- und Helligkeitssignal zeitlich zusammenfällt.

4. Schaltungsanordnung nach einem der vorhergehenden Ansprüche, dadurch gekennzeichnet, daß das Helligkeitssignal und das Farbdifferenzsignal als Folge amplitudendiskreter Abtastwerte mit einer durch ein Taktsignal bestimmten Abtastfrequenz vorliegen und daß die Abtastfrequenz gleich der Frequenz des dem Zähler (28) zugeführten Taktsignals ist.

5. Schaltungsanordnung nach Anspruch 4, dadurch gekennzeichnet, daß der Speicher ein Register (5, 14) ist, dessen Eingang in der zweiten Stellung des Umschalters (3, 12) mit seinem Ausgang verbunden ist.

## Claims

1. A circuit arrangement for increasing the definition of colour contours during the display of a colour television signal formed from a luminance signal and at least one colour difference signal, comprising a slope detector (21) which detects the slope of the luminance signal and produces a detection signal when the slope exceeds a predetermined value, a control circuit controlling at least one colour difference signal edge enhancement circuit (7, 16) including a change-over switch (3, 12) and a store (5, 14), and a delay circuit (20) for the luminance signal for providing coincidence with the edge enhanced colour difference signal, characterized in that when the change-over switch (3, 12) is in the first position a colour difference signal is stored in the store (5, 14) which supplies the edge enhanced colour difference signal and in the second position no colour difference signal is applied and that the control circuit includes a counter (28) which at the occurrence of the detection signal sets the change-over switch (3, 12) from the first to the second position, and after a number of counted equidistant clock pulses corresponding, to at least the duration of the steepest slope of the colour difference signal resets the change-over switch to the first position and which at the occurrence of a new detection signal during the second position of the change-over switch resets it briefly to the first position and then, after setting to the second position again counts the corresponding number of clock pulses.

2. A circuit arrangement as claimed in Claim 1, characterized in that the slope detector (21) comprises a high-pass filter (22) which differentiates the luminance signal, an amount former (22) forming the amount of the differentiated luminance signal and a comparator circuit (24) comparing the output signal of the amount former to a reference signal and supplying the detection signal when the output signal of the amount former (23) exceeds the reference signal.

3. A circuit arrangement as claimed in any one of the preceding Claims, characterized in that the colour difference signal is applied to the edge enhancement circuit (7, 16) via a delay circuit (1, 10), so that the starts of an ascend in the colour difference and luminance signals coincide.

4. A circuit arrangement as claimed in any one of the preceding Claims, characterized in that the luminance signal and the colour difference signal are available as a sequence of amplitude-discrete sampling value having a sampling frequency determined by a clock signal and that the sampling frequency is equal to the frequency of the clock signal applied to the counter (28).

5. A circuit arrangement as claimed in Claim 4, characterized in that the store is a register (5, 14) whose input is connected to its output when the change-over switch (3, 12) is in the second position.

**Revendications**

1. Montage de circuit servant à augmenter la netteté de bords colorés lors de la reproduction d'un signal de télévision couleur constitué d'un signal de luminance et d'au moins un signal de chrominance, comportant un détecteur de raideur (21) détectant la raideur du signal de luminance, qui fournit un signal de détection lorsque la raideur excède une certaine valeur absolue, un circuit de commande, qui commande au moins un commutateur (3, 12), et un circuit augmentant la raideur (7, 16) comportant une mémoire (5, 14) pour un signal de chrominance, ainsi qu'un circuit à retard (20) pour le signal de luminance, afin d'établir la coïncidence avec le signal de chrominance de raideur accrue, caractérisé en ce que dans la première position du commutateur (3, 12), un signal de chrominance est enregistré dans la mémoire (5, 14) fournissant le signal de chrominance de raideur accrue, tandis que dans la deuxième position, il n'y a pas d'application de signal de chrominance, et que le circuit de commande contient un compteur (28) qui amène le commutateur (3, 12) de la première position dans la deuxième position lors de l'apparition du signal de détection, qui ramène le commutateur (3, 12) dans la première position après un nombre d'impulsions équidistantes comptées correspondant au moins à la durée de la montée de signal de chrominance la plus raide et qui ramène brièvement le commutateur (3, 12) dans la première position, lors de l'apparition d'un nouveau signal de détection pendant que ce commutateur se trouve dans la deuxième position, puis qui recommence à compter le nombre correspondant d'impulsions après avoir ramené le commutateur dans la deuxième position.

2. Montage de circuit suivant la revendication 1, caractérisé en ce que le détecteur de raideur (21) contient un filtre passe-haut (22) différenciant le signal de luminance, un formateur de valeur absolue (23) produisant la valeur absolue du signal de luminance différencié et un circuit comparateur (24) qui compare le signal de sortie du formateur de valeur absolue à un signal de référence et qui fournit le signal de détection lorsque le signal de sortie du formateur de valeur absolue (23) est supérieur au signal de référence.

3. Montage de circuit suivant l'une quelconque des revendications précédentes, caractérisé en ce que le signal de chrominance est appliqué au circuit augmentant la raideur (7, 16) par l'intermédiaire d'un circuit à retard (1, 10), de sorte que le début d'une montée du signal de chrominance coïncide dans le temps avec celui du signal de luminance.

4. Montage de circuit suivant l'une quelconque des revendications précédentes, caractérisé en ce que le signal de luminance et le signal de chrominance sont présents sous forme d'une séquence de valeurs d'échantillonnage discrètes en amplitude, dont la fréquence d'échantillonnage est déterminée par un signal d'horloge et que la fréquence d'échantillonnage est égale à la fréquence du signal d'horloge appliqué au compteur (28).

5. Montage de circuit suivant la revendication 4, caractérisé en ce que la mémoire est un registre (5, 14), dont l'entrée est connectée à sa sortie dans la deuxième position du commutateur (3, 12).

FIG.1

FIG.2

FIG.3